# EUROPEAN PATENT APPLICATION

(11) **EP 3 693 561 A1**
(43) Date of publication of application: **12.08.2020**
(21) Application number: 19155726.3
(22) Date of filing: 06.02.2019
(51) Int. Cl.: F01D 25/16, F16C 17/04

(54) **SHAFT SEAL SYSTEM, TURBOMACHINE WITH SHAFT SEAL SYSTEM, AND METHOD OF SEALING A SHAFT**

(71) Applicant: ABB Turbo Systems AG, 5400 Baden (CH)
(72) Inventor: Rechin, Thomas, 5400 Baden (CH); Richner, Matthias, 5412 Gebenstorf (CH)
(74) Representative: Zimmermann & Partner Patentanwälte mbB

(57) **Abstract**

A shaft seal system (10) of a shaft (11) supported in a bearing housing (30) of a turbomachine is described. The shaft seal system includes a rotor-side seal (19) arranged between the bearing housing (30) and the shaft (11). Additionally, the shaft seal system includes an axial bearing (15) supporting the shaft (11). Further, a gap (13) is provided between a rotor-side thrust bearing surface (12) of the axial bearing (15) and an opposite surface (14) of the shaft (11). A gap width (W) of the gap (13) is adjustable as a function of rotation speed of the shaft (11).

## Description

### TECHNICAL FIELD

Embodiments of the present disclosure relate to shaft seal systems of turbomachines, particularly exhaust gas turbochargers. Further embodiments of the present disclosure relate to methods of sealing a shaft, particularly a shaft supported in a bearing housing of a turbomachine.

### BACKGROUND

Turbomachines, e.g. including turbochargers or power turbines, transfer energy between a rotor and a fluid. For instance, an exhaust gas turbocharger includes a compressor for transferring energy from a rotor to a fluid and a turbine for transferring energy from the fluid to a rotor.

Exhaust gas turbochargers are known to be used for increasing the power of an internal combustion engine. In exhaust gas turbochargers, a turbine is provided in the exhaust gas path of the internal combustion engine, and a compressor is arranged upstream of the internal combustion engine, which is connected to the turbine via a common shaft. An exhaust gas turbocharger generally includes a rotor, a bearing assembly for the shaft, flow-guiding housing sections (compressor housing and turbine housing) and a bearing housing. The rotor includes a shaft, an impeller and a turbine wheel.

With charging of an internal combustion engine by means of an exhaust gas turbocharger, the filling quantity and therefore the fuel mixture in the cylinders are increased by which a noticeable power increase for the engine can be obtained. Optionally, the energy which is stored within the exhaust gas of an internal combustion engine can be converted into electrical or mechanical energy by means of a power turbine. In this case, instead of a compressor, as in the case of the exhaust gas turbocharger, a generator or a mechanical consumer is connected to the turbine shaft.

Because of the high process pressure in the turbine-side and in the compressor-side flow region, the shaft of the exhaust gas turbocharger is sealed with a suitable sealing system in relation to the cavity of the bearing housing. The internal pressure in the cavity of the bearing housing usually corresponds to the atmospheric pressure. The gas pressure in the flow passage of the compressor side and turbine side depends on the actual operating point of the exhaust gas turbocharger and at most operating points lies above the pressure in the cavity of the bearing housing. In certain cases, however, a negative pressure is also to be taken into consideration, for example, in partial load operation or at rest.

In turbochargers, mainly with radial turbines, piston rings are used as gas seals. Further, typically systems with splash-off edges and catch chambers for shaft sealing against escaping oil are employed. As a result of the required clearance design (between rotating and non-rotating components) over the entire operating range, gaps between moving parts and stationary parts are designed according to the worst-case conditions with fixed gap dimensions. It has been found that conventional shaft sealing systems have the problem that oil leakages can occur at standstill and at low speeds, as there is either a very small positive or even negative pressure drop, having a "pumping-effect" into the bearing housing.

Accordingly, in view of the above, there is a demand for shaft seal systems and shaft sealing methods which at least partially overcome the problems of the state of the art, such that improved turbomachines, particularly exhaust gas turbochargers, can be provided.

### SUMMARY

In light of the above, a shaft seal system, a turbomachine including the shaft seal system, and a method for sealing a shaft according to the independent claims are provided. Further aspects, advantages, and features are apparent from the dependent claims, the description, and the accompanying drawings.

According to an aspect of the present disclosure, a shaft seal system of a shaft supported in a bearing housing of a turbomachine is provided. The shaft seal system includes a rotor-side seal arranged between the bearing housing and the shaft. Additionally, the shaft seal system includes an axial bearing supporting the shaft. Further, a gap is provided between a rotor-side thrust bearing surface of the axial bearing and an opposite surface of the shaft. A gap width of the gap is adjustable as a function of rotation speed of the shaft. In particular, the gap width is increasable with increasing rotation speed of the shaft and decreasable with decreasing rotation speed of the shaft.

Accordingly, the shaft seal system of the present disclosure is improved compared to conventional shaft seal systems. In particular, the shaft seal system of the present disclosure beneficially provides for a shaft seal system in which a gap width between the axial bearing and an opposite surface of the shaft can be actively controlled depending on the operation conditions. More specifically, at rest (i.e. no ration) the gap width can be minimized or even closed such that only little or even no oil can penetrate into the gap, typically representing an "inlet gap" of the seal system. Accordingly, at rest beneficially an oil sink cavity in the bearing housing on the turbine side can be kept dry, thus reducing oil entry via an exit gap of the sealing system to a minimum. When the shaft is rotated, the gap width can be increased such that oil can penetrate into the gap and wear is substantially avoided.

According to a further aspect of the present disclosure, a turbomachine including a shaft seal system according to any of the embodiments described herein is provided. In particular, the turbomachine is an exhaust gas turbocharger including a radial exhaust gas turbine. Accordingly, an exhaust gas turbocharger including a radial exhaust gas turbine and a shaft seal system as described herein of a shaft supported in a bearing housing of the exhaust gas turbocharger is provided. Thus, beneficially an improved turbomachine, particularly an improved exhaust gas turbocharger, can be provided.

According to another aspect, a method for sealing a shaft supported in a bearing housing of a turbomachine is provided. The method includes adaptively adjusting a gap width of a gap provided between a thrust bearing surface and an opposite surface of the shaft as a function of rotation speed of the shaft. In particular, adaptively adjusting the gap width includes increasing the gap width with increasing rotation speed of the shaft and decreasing the gap width with decreasing rotation speed of the shaft.

Accordingly, compared to conventional shaft sealing methods, embodiments of the method for sealing a shaft as described herein are improved, because oil leakages at standstill or at low rotational speeds can be avoided while at high rotational speeds, sufficient lubrication can be ensured such that wear is substantially avoided.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows a schematic partially opened up sectional view of an exhaust gas turbocharger with a radial compressor and a radial turbine according to the prior art;
- Fig. 2: shows a schematic sectional view of a shaft seal system according to embodiments described herein; and
- Fig. 3: shows a flowchart for illustrating a method for sealing a shaft according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

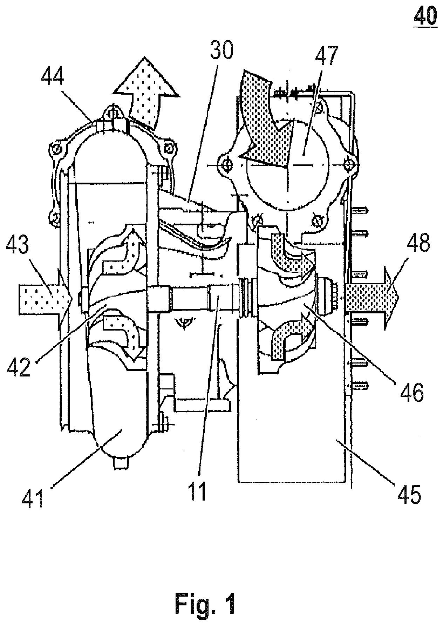

With exemplary reference to Fig. 1, an exhaust gas turbocharger 40 with a radial compressor 41 and a radial turbine 45 according to the prior art is described. In particular, the housing of the depicted exhaust gas turbocharger is shown partially opened up to more clearly depict the impeller 42, the shaft 11 and the turbine wheel 46. Thick arrows are used to indicate the air routing from the air inlet 43 via the impeller 42 to the air outlet 44 as well as the gas routing from the gas inlet 47 via the turbine wheel 46 to the gas outlet 48. The shaft 11 is rotatably supported in the bearing housing 30 by means of two radial bearings and at least one thrust bearing.

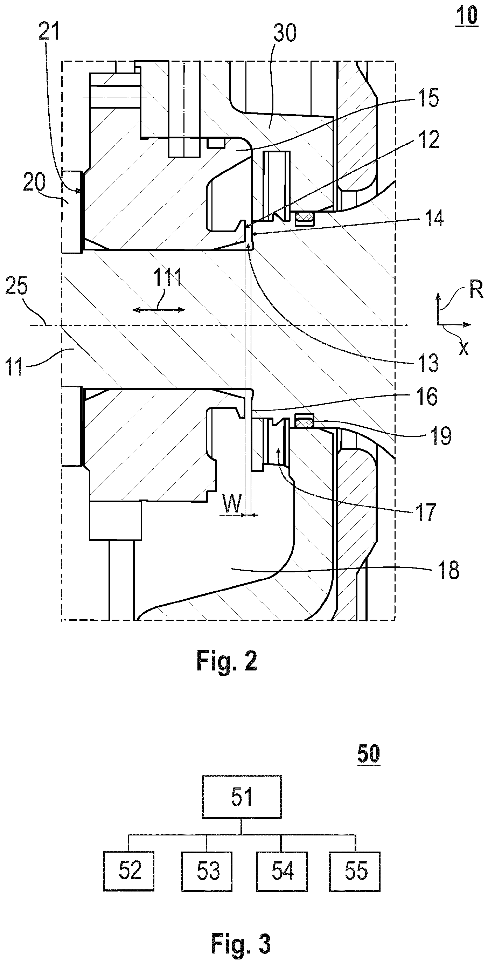

With exemplary reference to Fig. 2, a shaft seal system 10 of a shaft 11 supported in a bearing housing 30 of a turbomachine according to the present disclosure is described. According to embodiments, which can be combined with other embodiments described herein, the shaft seal system 10 includes a rotor-side seal 19 arranged between the bearing housing 30 and the shaft 11. In the present disclosure, the "rotor-side" refers to the side at which the turbine rotor, i.e. the turbine wheel, is provided. Accordingly, the "rotor-side" may be referred to as "turbine-wheel" side.

Additionally, the shaft seal system 10 includes an axial bearing 15 supporting the shaft 11. Further, the shaft seal system 10 includes a gap 13 provided between a rotor-side thrust bearing surface 12 of the axial bearing 15 and an opposite surface 14 of the shaft 11. A gap width W of the gap 13 is adjustable as a function of rotation speed of the shaft 11. In other words, the shaft seal system is configured such that a gap width W between the axial bearing of the shaft and an opposite surface of the shaft can be actively controlled depending on the operation conditions, namely the rotation speed of the shaft. In particular, the shaft seal system is configured such that the gap width W is increasable with increasing rotation speed of the shaft and decreasable with decreasing rotation speed of the shaft.

Accordingly, embodiments of the shaft seal system beneficially provide for an adaptive shaft seal system. More specifically, in a stationary state (i.e. no ration of the shaft) the gap width between the axial bearing of the shaft and the opposite surface of the shaft can be minimized or even closed, such that advantageously only little or even no oil can penetrate into the gap, which typically is an "inlet gap" of the seal system. Accordingly, the "gap" referred to herein can be a lubrication inlet gap of the shaft seal system. Thus, in a stationary state an oil sink cavity in the bearing housing on the turbine side can be kept dry and an oil entry via an exit gap 17 (shown in Fig. 2) of the seal system can be reduced to a minimum. Upon rotation of the shaft, the gap width increases such that oil can penetrate into the gap and wear of the axial bearing and the shaft can substantially be avoided.

According to embodiments, which can be combined with other embodiments described herein, the rotor-side thrust bearing surface 12 is an auxiliary thrust bearing surface. Typically, lubricant (e.g. oil) is indirectly supplied to the rotor-side thrust bearing surface 12 by the axial bearing 15. Typically, the rotor-side thrust bearing surface 12 is an annular surface extending in a radial direction R of the shaft 11. Similarly, the opposite surface 14 of the shaft 11 is an annular surface extending in the radial direction R of the shaft 11. Typically, the opposite surface 14 of the shaft 11 is a radial annular surface provided by a radial step 16 of the shaft 11.

According to embodiments, which can be combined with other embodiments described herein, the axial bearing 15 includes a main thrust bearing surface 21 facing in an opposite direction than the rotor-side thrust bearing surface 12. In particular, as exemplarily shown in Fig. 2, the main thrust bearing surface 21 faces in the negative axial direction x and the rotor-side thrust bearing surface 12 faces in the positive axial direction x. Typically the main thrust bearing surface 21 faces a thrust ring 20 provided around the shaft 11. Thus, the thrust ring 20 and the main thrust bearing surface 21 form a bearing gap, which may also be referred to as main bearing gap. Typically, the main bearing is supplied directly with lubricant. Accordingly, a hydrodynamic force acting on the shaft in the negative axial direction may be generated.

According to embodiments, which can be combined with other embodiments described herein, the main thrust bearing surface 21 has a larger surface area than the rotor-side thrust bearing surface 12. Such a configuration can be beneficial for providing an adjustable gap width depending on the operation condition as described herein. In particular, the shaft can be moved in the negative axial direction x (i.e. pushed to the left in the embodiment shown in Fig. 2), particularly by the hydrodynamic pressure in the main bearing gap at low rotation speed of the shaft or in a stationary state. As a result, the gap 13 is minimized or even closed such that no or little oil penetrates to the rotor-side seal 19.

At higher rotation speeds and the associated higher turbine inlet pressures, the turbine thrust builds up in the positive axial direction (i.e. to the right in the embodiment shown in Fig. 2) and thus opens the gap 13. Accordingly, at higher rotation speeds wear in the gap can be prevented.

As exemplary shown in Fig. 2, typically the main thrust bearing surface 21 is an annular surface extending in the radial direction R. Similarly, typically the rotor-side thrust bearing surface 12 is an annular surface extending in the radial direction R.

As exemplarily indicated by the double sided arrow 111 in Fig. 2, according to embodiments, which can be combined with other embodiments described herein, the shaft 11 is movable along the axial direction x with respect to the axial bearing 15. In particular, it is to be understood that the shaft seal system is configured such that the shaft 11 is movable in the positive axial direction x as well as in the negative axial direction x. Further, from Fig. 2 it is to be understood that typically the axial bearing 15 is fixed in the bearing housing 30.

Accordingly, the shaft 11 can be movable along the axial direction x relative to the axial bearing 15. In particular, the shaft seal system is configured such that the shaft 11 moves in the negative axial direction x when the rotation speed of the shaft 11 is decreased. Further, the shaft seal system is configured such that the shaft 11 moves in the positive axial direction x when the rotation speed of the shaft 11 is increased.

Accordingly, the gap width W of the gap 13 is increasable with increasing rotation speed of the shaft 11. In particular, the gap width W of the gap 13 is increasable by employing forces acting on the shaft in the positive axial direction x towards the rotor-side seal 19. For instance, forces acting on the shaft in the positive axial direction may include hydrodynamic forces.

Further, the gap width W of the gap 13 can be decreasable with decreasing rotation speed of the shaft 11. In particular, the gap width W of the gap 13 is decreasable by employing forces acting on the shaft in the negative axial direction x away from the rotor-side seal 19. For instance, forces acting on the shaft in the negative axial direction may include hydrodynamic forces.

According to embodiments, which can be combined with other embodiments described herein, the axial bearing includes an integrated radial bearing. Further, the axial bearing includes one or more lubrication supply channels for bearing lubrication.

Accordingly, it is to be understood by employing a shaft seal system according to embodiments described herein in a turbomachine, e.g. an exhaust gas turbocharger comprising a radial exhaust gas turbine, an improved turbomachine, particularly an improved exhaust gas turbocharger, can be provided.

Thus, according to a further aspect of the present disclosure, a turbomachine including a shaft seal system according to any of the embodiments described herein is provided. In particular, the turbomachine can be an exhaust gas turbocharger including a radial exhaust gas turbine. Alternatively, the turbomachine can be a power turbine including a generator.

With exemplary reference to the flowchart shown in Fig. 3, a method 50 for sealing a shaft 11 supported in a bearing housing 30 of a turbomachine according to the present disclosure is described. According to embodiments, which can be combined with other embodiments described herein, the method includes adaptively adjusting (represented by block 51 in Fig. 3) a gap width W of a gap 13 provided between a thrust bearing surface 12 and an opposite surface 14 of the shaft 11 as a function of rotation speed of the shaft.

According to embodiments, which can be combined with other embodiments described herein, adaptively adjusting the gap width W includes axially moving (represented by block 52 in Fig. 3) the opposite surface 14 of the shaft 11 relative to the thrust bearing surface 12. In particular, typically the thrust bearing surface 12 is provided by an axial bearing 15 supporting the shaft 11, as exemplarily shown in Fig. 2. Further, the opposite surface 14 of the shaft 11 can be a radial annular surface provided by a radial step 16 of the shaft 11 as shown in Fig. 2.

According to embodiments, which can be combined with other embodiments described herein, adaptively adjusting the gap width includes increasing the gap width W (represented by block 53 in Fig. 3) with increasing rotation speed of the shaft 11.

According to embodiments, which can be combined with other embodiments described herein, adaptively adjusting the gap width W includes decreasing the gap width W (represented by block 54 in Fig. 3) with decreasing rotation speed of the shaft 11.

According to embodiments, which can be combined with other embodiments described herein, adaptively adjusting the gap width (W) comprises employing forces acting on the shaft 11 in an axial direction of the shaft 11.

For instance, increasing the gap width W typically includes employing forces acting on the shaft in the positive axial direction x towards the rotor-side seal 19. For instance, forces acting on the shaft in the positive axial direction may include hydrodynamic forces generated by lubrication fluid, such as oil. Decreasing the gap width W typically includes employing forces acting on the shaft in the negative axial direction x away from the rotor-side seal 19. For instance, forces acting on the shaft in the negative or positive axial direction may include hydrodynamic forces.

In this regard, it is to be understood that typically there are not only hydrodynamic forces which may act on the shaft in the axial direction and other mechanical force may also contribute for adjusting or controlling the gap width W. However, in a non-rotating state or at low rotational speeds of the shaft, typically hydrodynamic forces dominate.

In view of the above, it is to be understood that the method 50 for sealing a shaft according to embodiments described herein may include using a shaft seal system 10 according any embodiments described herein. In other words, the shaft seal system 10 can be used for conducting the method 50 for sealing the shaft.

Hence, compared to the state of the art, the embodiments described herein provide for an improved shaft seal system, an improved turbomachine, particularly an improved exhaust gas turbocharger, as well as for an improved method for sealing a shaft supported in a bearing housing. In particular, embodiments of the present disclosure beneficially provide for a shaft seal system, a turbomachine including the shaft seal system, and a shaft sealing method which are configured for adaptive adjustment of a gap width of a gap between an axial bearing supporting the shaft and an opposite surface of the shaft. Typically, the gap is a lubrication inlet gap of the sealing system. As described herein, the gap width can be influenced as a function of the operating situation. Accordingly, with embodiments of the present disclosure oil leakages at standstill or at low rotational speeds can be avoided while at high rotational speeds, sufficient lubrication can be ensured such that wear is substantially avoided.

While the foregoing is directed to embodiments, other and further embodiments may be devised without departing from the basic scope, and the scope is determined by the claims that follow.

### REFERENCE NUMBERS

- 10: shaft seal system
- 11: shaft
- 111: arrow indicating moving direction of the shaft
- 12: thrust bearing surface
- 13: gap
- 14: opposite surface
- 15: axial bearing
- 16: radial step of the shaft
- 17: exit gap
- 18: cavity in the bearing housing
- 19: rotor-side seal / piston ring
- 20: thrust ring
- 21: main thrust bearing surface
- 25: rotational axis
- 30: bearing housing
- 40: exhaust gas turbocharger
- 41: compressor
- 42: impeller
- 43: air inlet
- 44: air outlet
- 45: turbine
- 46: turbine wheel
- 47: gas inlet
- 48: gas outlet
- 50: method for sealing a shaft
- 51, 52, 53, 54: block
- W: gap width
- R: radial direction
- x: axial direction

## Claims

1. A shaft seal system (10) of a shaft (11) supported in a bearing housing (30) of a turbomachine, comprising
- a rotor-side seal (19) arranged between the bearing housing (30) and the shaft (11);
- an axial bearing (15) supporting the shaft (11); and
- a gap (13) provided between a rotor-side thrust bearing surface (12) of the axial bearing (15) and an opposite surface (14) of the shaft (11),
wherein a gap width (W) of the gap (13) is adjustable as a function of rotation speed of the shaft (11).

2. The shaft seal system (10) according to claim 1, wherein the rotor-side thrust bearing surface (12) is an auxiliary thrust bearing surface, and wherein the opposite surface (14) of the shaft (11) is an annular surface extending in a radial direction (R) of the shaft (11).

3. The shaft seal system (10) according to claim 1 or 2, wherein the axial bearing (15) further comprises a main thrust bearing surface (21) facing in an opposite direction than the rotor-side thrust bearing surface (12), wherein the main thrust bearing surface (21) faces a thrust ring (20) provided around the shaft (11), and wherein the main thrust bearing surface (21) has a larger surface area than the rotor-side thrust bearing surface (12).

4. The shaft seal system (10) according to any of claims 1 to 3, wherein the shaft (11) is movable in an axial direction (x) with respect to the axial bearing (15).

5. The shaft seal system (10) according to any of claims 1 to 4, wherein the gap width (W) of the gap (13) is increasable with increasing rotation speed of the shaft (11), particularly by employing forces acting on the shaft in the positive axial direction (x).

6. The shaft seal system (10) according to any of claims 1 to 5, wherein the gap width (W) of the gap (13) is decreasable with decreasing rotation speed of the shaft (11), particularly by employing hydrodynamic forces acting on the shaft in the axial direction (x) away from the rotor-side seal (19).

7. The shaft seal system (10) according to any of claims 1 to 6, wherein the axial bearing (15) comprises an integrated radial bearing, and wherein the axial bearing comprises one or more lubrication supply channels for bearing lubrication.

8. A turbomachine comprising a shaft seal system according any of claims 1 to 7, particularly the turbomachine being an exhaust gas turbocharger comprising a radial exhaust gas turbine or the turbomachine being a power turbine including a generator.

9. Method for sealing a shaft (11) supported in a bearing housing (30) of a turbomachine, comprising adaptively adjusting a gap width (W) of a gap (13) provided between a thrust bearing surface (12) and an opposite surface (14) of the shaft (11) as a function of rotation speed of the shaft.

10. The method according to claim 9, wherein adaptively adjusting the gap width (W) comprises axially moving the opposite surface (14) of the shaft (11) relative to the thrust bearing surface (12).

11. The method according to claim 9 or 10, wherein the thrust bearing surface (12) is provided by an axial bearing (15) supporting the shaft (11), and wherein the opposite surface (14) of the shaft (11) is a radial annular surface provided by a radial step (16) of the shaft (11).

12. The method according to any of claims 9 to 11, wherein adaptively adjusting the gap width comprises increasing the gap width (W) with increasing rotation speed of the shaft (11).

13. The method according to any of claims 9 to 12, wherein adaptively adjusting the gap width (W) comprises decreasing the gap width (W) with decreasing rotation speed of the shaft (11).

14. The method of any of claims 9 to 13, wherein adaptively adjusting the gap width (W) comprises employing forces acting on the shaft in the axial direction of the shaft (11).

15. The method of any of claims 9 to 14, wherein the method comprises using a shaft seal system (10) according any of claims 1 to 7.
